# FASCICULE DE BREVET EUROPEEN

(11) **EP 4 545 904 B1**
(45) Date de publication et mention de la délivrance du brevet: **27.08.2025**
(21) Numéro de dépôt: 24187637.4
(22) Date de dépôt: 10.07.2024
(51) Int. Cl.: G01B 11/16, G01D 5/353

(54) **SYSTÈME DE MESURE COMPRENANT UNE FIBRE OPTIQUE MUNIE D'AU MOINS UN RÉSEAU DE BRAGG POUR MESURER UNE DÉFORMATION DYNAMIQUE, AÉRONEF ET PROCEDE**
MESSSYSTEM MIT EINER OPTISCHEN FASER MIT MINDESTENS EINEM BRAGG-GITTER ZUR MESSUNG DYNAMISCHER DEFORMATION, LUFTFAHRZEUG UND VERFAHREN
MEASURING SYSTEM COMPRISING AN OPTICAL FIBRE PROVIDED WITH AT LEAST ONE BRAGG GRATING FOR MEASURING A DYNAMIC DEFORMATION, AIRCRAFT AND METHOD

(30) Priorité: 25.10.2023 FR 2311559
(43) Date de publication de la demande: 30.04.2025
(73) Titulaire: Airbus Helicopters, 13725 Marignane Cedex (FR)
(72) Inventeur: ASSELIN, Maxime, 13012 MARSEILLE (FR); N'GUYEN, Pascal, 92700 COLOMBES (FR); ORTALI, Romain, 13700 MARIGNANE (FR)
(74) Mandataire: GPI Brevets

(56) Documents cités:
- US-A1- 2002 041 724
- US-A1- 2015 049 981

## Description

La présente invention concerne un système de mesure comprenant une fibre optique munie d'au moins un réseau de Bragg pour mesurer une déformation dynamique d'un objet, un aéronef muni d'un tel système de mesure, et un procédé.

Divers systèmes de mesure sont connus afin d'évaluer les déformations d'un objet.

Un système de mesure connu comporte une fibre optique ayant au moins un réseau de Bragg. Ce système comprend une fibre optique munie d'un noyau qui permet de guider un signal optique, d'une gaine qui recouvre le noyau et qui a notamment pour fonction de contenir les ondes lumineuses dans le noyau, et d'un revêtement qui recouvre la gaine. Une telle gaine est parfois dénommée « cladding » en langue anglaise. Le revêtement est parfois dénommé «coating » en langue anglaise.

De plus, ce système de mesure connu comporte au moins un réseau de Bragg ménagé dans le noyau. Chaque réseau de Bragg permet de réfléchir uniquement une partie de la lumière présentant une longueur d'onde particulière. Les rayons lumineux du spectre de lumière non réfléchi poursuivent leur chemin le long du noyau de la fibre optique.

La longueur d'onde de cette lumière réfléchie dépend du produit du pas du réseau de Bragg et de l'indice de réfraction du noyau de la fibre optique. L'indice de réfraction et le pas sont eux-mêmes fonction de la température extérieure et de la déformation de la fibre optique.

Ainsi, une modification de la longueur d'onde de la lumière réfléchie peut être porteuse d'une modification de la température et/ou d'une déformation de la fibre optique.

Un instrument de mesure dénommé « interrogateur » permet alors d'évaluer une température ou une déformation à partir de la lumière réfléchie.

Pour évaluer la déformation d'un objet avec un tel système de mesure, la fibre optique est solidarisée à cet objet. Une déformation de l'objet induit alors une déformation de la fibre optique et ainsi une modification de la longueur d'onde de la lumière réfléchie. Pour optimiser les mesures en tenant compte de la température, les mesures peuvent être réalisées à température constante et/ou une mesure de température peut être réalisée en parallèle à l'aide d'un autre réseau de Bragg ou d'un thermocouple par exemple.

Cette technologie permet à un interrogateur d'évaluer une déformation totale, mais pas de distinguer une déformation statique et une déformation dynamique de l'objet. Or, il peut être utile d'évaluer la déformation dynamique d'un objet, par exemple pour évaluer la durée de vie d'un organe déformable dynamiquement telle une pale d'un rotor d'hélicoptère.

Le document EP 0892250 B1 ne fournit pas une solution à ce problème en décrivant une fibre optique comprenant à son extrémité un réseau de Bragg, cette extrémité étant entourée d'un bouchon à faible module de Young pour obtenir une lumière réfléchie ayant une longueur d'onde fonction essentiellement de la température.

Le document FR 2946140 B1 est aussi éloigné de cette problématique en concernant un hydrophone à fibre optique à réseau de Bragg.

Le document EP 2507605 B1 décrit un palier comprenant une bague munie d'une rainure, et une fibre optique à réseau de Bragg placée à l'intérieur de la rainure.

Le document FR 2909446 B1 décrit un dispositif de mesure des déformations mécaniques d'un profilé, ce dispositif comprenant au moins un capteur à fibre optique à deux réseaux de Bragg en croix. Le document US 2015/049981 A1 décrit un système de mesure comprenant un tube et une fibre optique agencée dans le tube. Une couche tampon peut être interposée entre la fibre optique et le tube. La couche tampon peut comprendre un matériau appartenant à la classe des fluides non newtoniens.

Le document US 2002/041724 A1 est éloigné du domaine technique de l'invention en ayant trait à la mesure de fluides corporels.

La présente invention a alors pour objet de proposer un système de mesure innovant pour mesurer des déformations dynamiques, par exemple des déformations dynamiques d'une pale d'un rotor d'aéronef.

L'invention vise ainsi un système de mesure pour mesurer une déformation dynamique d'un objet, le système de mesure comprenant une fibre optique, la fibre optique s'étendant au moins partiellement dans un tube qui est configuré pour être solidaire dudit objet, la fibre optique ayant un secteur de mesure mobile à l'intérieur du tube, le secteur de mesure comprenant au moins un réseau de Bragg.

Ce système de mesure comprend un fluide non Newtonien remplissant au moins une chambre délimitée par le tube, le secteur de mesure s'étendant dans ladite au moins une chambre, le fluide non Newtonien étant en contact du tube et du secteur de mesure.

Selon l'invention, le système de mesure comporte au moins une bague solidaire du secteur de mesure et agencée dans ledit fluide non Newtonien.

Le secteur de mesure peut bouger par rapport au tube, par une connexion mécanique. Un tel agencement est parfois qualifié de mode « loose » en langue anglaise.

Un fluide non Newtonien a une viscosité qui varie en fonction de la force subie. Selon l'invention, plus le fluide non Newtonien subi une contrainte mécanique forte, plus le fluide non Newtonien tend à se comporter comme un solide et tend donc à solidariser le secteur de mesure et le tube.

Par exemple, le fluide non Newtonien peut être un fluide rhéoépaississant ou un fluide viscoélastique, voire un polymère fondu.

Par exemple, le fluide non Newtonien peut être un fluide rhéoépaississant comportant un liquide contenant des particules solides différentes du liquide. Ainsi, lorsque l'on exerce une force sur le fluide rhéoépaississant, les particules présentes dans le liquide se regroupent, et se lient entre elles ce qui donne une organisation ordonnée des particules comme pour l'eau à l'état solide. Lorsque la force est annulée, les molécules du liquide reprennent leurs places entre les particules. Par exemple, le fluide non Newtonien comporte un mélange de fécule de maïs et d'eau.

Par conséquent, une déformation de l'objet génère une déformation du tube puisque le tube est solidaire de cet objet. En revanche, le secteur de mesure est encapsulé dans le tube tout en pouvant se mouvoir dans le tube.

En présence d'une déformation statique, la viscosité du fluide non Newtonien est faible. Le tube se déplace par rapport au secteur de mesure de la fibre optique. La fibre optique n'est alors pas déformée. La longueur d'onde de la lumière réfléchie par chaque réseau de Bragg ne varie alors pas ou varie peu

A l'inverse, en présence d'une déformation dynamique, la viscosité du fluide non Newtonien augmente. La déformation du tube génère une déformation du secteur de mesure, via le fluide non Newtonien.

La longueur d'onde de la lumière réfléchie par au moins un réseau de Bragg est alors modifiée. La variation de la déformation mesurée avec un interrogateur est alors l'image de la déformation dynamique subie.

Le fluide non Newtonien permet ainsi d'estimer une déformation dynamique, et non pas une simple déformation sans que l'on puisse conclure si cette déformation résulte d'une déformation statique et/ou dynamique. Un tel système de mesure est en particulier utilisable pour une pale d'un rotor, et par exemple une pale d'un rotor principal d'un hélicoptère. En effet, la durée de vie d'une pale peut être estimée en fonction de la déformation dynamique subie par cette pale lors de son utilisation.

Chaque bague participe quant à elle à la déformation du secteur de mesure en présence d'une déformation dynamique générant une augmentation de la viscosité du fluide non Newtonien. En effet, chaque bague constitue un épaulement en contact avec le fluide non Newtonien et susceptible de constituer un obstacle mis en mouvement par ce fluide non Newtonien.

Ce système de mesure peut comporter une ou plusieurs des caractéristiques qui suivent, prises seules ou en combinaison les unes avec les autres.

Selon une possibilité, ladite au moins une chambre peut être fermée par au moins un bouchon disposé dans le tube et étanche au fluide non Newtonien.

Une ou des chambres peuvent être délimitées longitudinalement par au moins un bouchon et radialement par le tube. Par exemple une chambre peut s'étendre entre deux bouchons disposés dans le tube et étanches au fluide non Newtonien, ou entre un bouchon et un fond ou une cloison du tube.

Par ailleurs, le fluide non Newtonien peut comporter des particules en suspension dans un liquide. Le volume de chaque chambre peut être optimisé afin que les particules soient réparties de manière homogène dans le liquide en utilisation, notamment pour une utilisation sur une pale subissant des efforts centrifuges. Le terme « chaque » est utilisé dans l'expression « le volume de chaque chambre » aussi bien en présence de plusieurs chambres que d'une unique chambre. Il en va de même dans la suite du texte lorsque le terme « chaque » est associé à un autre nom.

Selon une possibilité compatible avec les précédentes, ladite au moins une chambre peut comporter deux chambres remplies du fluide non Newtonien et disposées de part et d'autre d'un dit réseau

de Bragg, le secteur de mesure s'étendant dans ces deux chambres. Un réseau de Bragg peut ainsi se trouver entre deux tronçons du secteur de mesure pouvant être solidaires du tube via le fluide non Newtonien en présence de déformations dynamiques.

Alternativement, le système de mesure peut comporter une unique chambre, un réseau de Bragg étant localisé entre un point d'ancrage de la fibre optique et ladite chambre.

Une unique chambre peut être suffisante pour déformer le réseau de Bragg.

Selon une possibilité compatible avec les précédentes, le réseau de Bragg peut être disposé dans ladite au moins une chambre.

Un ou plusieurs réseaux de Bragg peuvent être noyés dans le fluide non Newtonien.

Selon une possibilité compatible avec les précédentes, le système de mesure peut comporter un interrogateur optiquement couplé à la fibre optique, l'interrogateur étant configuré pour illuminer la fibre optique ainsi que pour capter une lumière réfléchie par ledit réseau de Bragg et en déduire une déformation dynamique de l'objet.

Un interrogateur usuel et connu de l'homme du métier peut être utilisé pour émettre un faisceau lumineux dans la fibre optique et capter la lumière réfléchie par le réseau de Bragg. Un contrôleur de l'interrogateur peut être configuré pour calculer une déformation dynamique subie en fonction de cette lumière réfléchie.

Selon une possibilité compatible avec les précédentes, le secteur de mesure peut comporter plusieurs réseaux de Bragg ayant des pas différents.

Plusieurs réseaux de Bragg peuvent être ménagés dans la fibre optique, et dans le secteur de mesure en particulier, afin de surveiller les déformations dynamiques au niveau de diverses zones de l'objet surveillé. Par exemple, le secteur de mesure peut comprendre une vingtaine de réseaux de Bragg. Chaque réseau de Bragg est configuré pour réfléchir la lumière dans une plage de valeurs distinctes des autres réseaux de Bragg en utilisation, pour permettre à un interrogateur de déterminer les déformations au niveau des diverses zones de l'objet.

Selon une possibilité compatible avec les précédentes, ladite fibre optique peut comporter un noyau muni dudit au moins un réseau de Bragg, la fibre optique comportant une gaine entourant le noyau, la fibre optique comprenant un revêtement entourant la gaine, le revêtement ayant un alliage à base de Fer et de Nickel.

Un tel revêtement permet d'isoler thermiquement le noyau pour que les mesures soient peu, voire pas, influencées par la température extérieure et/ou la température de l'objet. En outre, l'évolution de la température peut être un phénomène lent dû à des constantes de diffusion lente. Une telle évolution et son impact sur la déformation mesurée peut ainsi être identifié pour déterminer précisément la déformation dynamique subie.

Alternativement, le système de mesure peut être utilisé en présence d'une température qui évolue peu.

Selon un autre aspect, un aéronef muni d'un objet peut comporter un système de mesure selon l'invention, ledit tube étant accolé contre l'objet ou noyé dans l'objet.

L'invention vise aussi un procédé mis en œuvre par un tel système de mesure. L'invention concerne alors un procédé de mesure d'une déformation dynamique d'un objet avec un système de mesure comprenant une fibre optique s'étendant dans un tube qui est configuré pour être solidaire dudit objet, la fibre optique ayant un secteur de mesure mobile à l'intérieur du tube, le secteur de mesure comprenant au moins un réseau de Bragg. Ce procédé de mesure comporte les étapes suivantes :
a) en présence d'une déformation statique, rendre automatiquement mobile le secteur de mesure par rapport au tube au sein d'un fluide non Newtonien en contact avec le tube et le secteur de mesure,
b) en présence d'une déformation dynamique, solidariser le secteur de mesure au tube avec le fluide non Newtonien, émission d'une lumière dans la fibre optique, et réception d'une lumière réfléchie par le réseau de Bragg, et détermination de la déformation dynamique en fonction d'une loi de mesure et de ladite lumière réfléchie.

L'invention et ses avantages apparaîtront avec plus de détails dans le cadre de la description qui suit avec des exemples donnés à titre illustratif en référence aux figures annexées qui représentent :
la figure 1, une vue d'un système de mesure pour mesurer une déformation d'un objet,
la figure 2, une vue d'un système de mesure pour mesurer une déformation d'un objet,
la figure 3, une vue d'un système de mesure pour mesurer une déformation d'un objet, et
la figure 4, un diagramme explicitant l'invention.

Les éléments présents dans plusieurs figures distinctes sont affectés d'une seule et même référence.

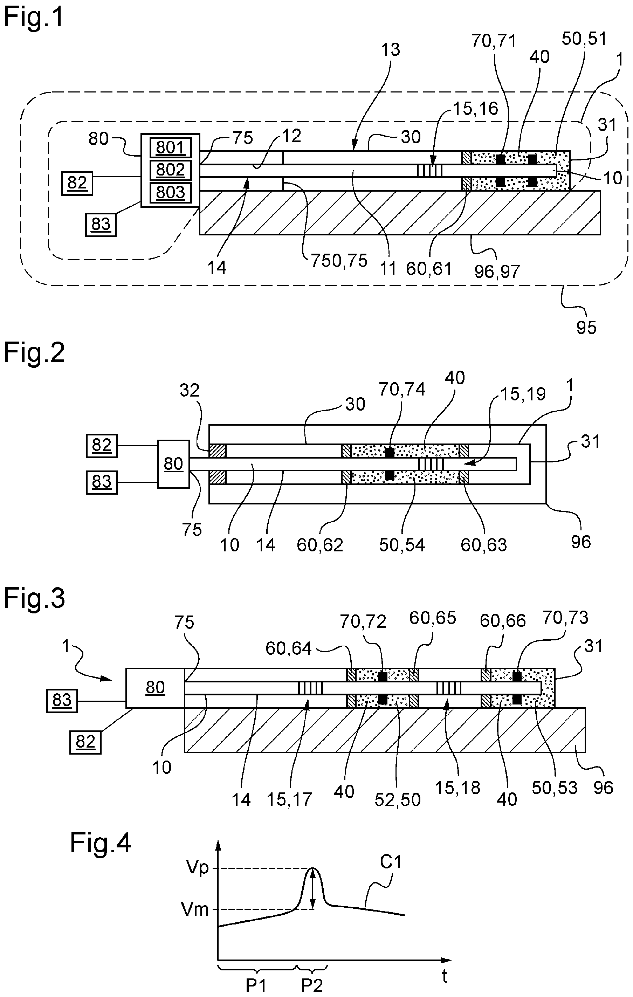

Les figures 1 à 3 illustrent divers systèmes de mesure 1 selon l'invention pour mesurer une déformation dynamique d'un objet 96.

En référence à la figure 1 et quelle que soit la réalisation du système de mesure 1, cet objet 96 et le système de mesure 1 peuvent être agencés au sein d'un aéronef 95. Par exemple, l'objet 96 peut être une pale 97 d'un rotor participant au moins à la sustentation de l'aéronef 95.

Le système de mesure 1 comprend une fibre optique 10. La fibre optique 10 est munie d'un secteur de mesure 14 qui comprend un ou plusieurs réseaux de Bragg 15. Les figures 1 et 2 illustrent une fibre optique 10 ayant un secteur de mesure 14 muni d'un unique réseau de Bragg 16, 19 alors que la figure 3 illustre une fibre optique 10 ayant un secteur de mesure 14 muni de deux réseaux de Bragg 17, 18. En présence de plusieurs réseaux de Bragg 15, ces réseaux de Bragg 15 ont favorablement des pas différents pour réfléchir la lumière à des longueurs d'ondes différentes et distinguables. La référence 15 désigne n'importe quel réseau de Bragg, les références 16 à 19 étant utilisées pour désigner un réseau de Bragg particulier si besoin.

Dès lors, la fibre optique 10 comporte un noyau 11 muni du ou des réseaux de Bragg 15. Chaque réseau de Bragg 15 peut être formé de manière usuelle sur le noyau 11. De plus, la fibre optique 10 comporte une gaine 12 entourant le noyau 11. La gaine 12 peut être une gaine usuelle visant à contenir les ondes lumineuses dans le noyau 11. Enfin, la fibre optique 10 peut comprendre un revêtement 13 qui entoure la gaine 12. Ce revêtement 13 peut comprendre un alliage à base de Fer et de Nickel pour isoler thermiquement le noyau de l'extérieur de la fibre optique 10, voire peut comprendre 64% de Fer et 36% de Nickel.

La fibre optique 10 s'étend totalement, ou en partie seulement, dans un tube 30. Eventuellement le tube 30 peut comprendre du tétra-fluoroéthylène. Ce tube 30 est solidarisé par des moyens usuels à l'objet 96. Selon l'exemple de la figure 1, le tube 30 peut être collé à une paroi de l'objet 96. Selon l'exemple de la figure 2, le tube 30 peut être noyé dans une épaisseur de l'objet 96.

Quelle que soit la réalisation et en référence à la figure 1, le secteur de mesure 14 est rendu mobile à l'intérieur du tube 30. Le secteur de mesure 14 n'est pas fixé physiquement au tube 30 sur la totalité de sa longueur et est donc libre de bouger au sein du tube 30, et donc par rapport au tube 30, en l'absence de déformations dynamiques du tube 30.

La fibre optique 10 est en outre connectée optiquement à un interrogateur 80. Par exemple, la fibre optique 10 est physiquement connectée à l'interrogateur 80 au niveau d'un point d'ancrage 75.

Le tube 30 peut aussi être connecté à l'interrogateur 80, ou peut être traversé par la fibre optique 10, tel qu'illustré sur la figure 2. Dans ce cas, une cloison 32 peut obturer l'extrémité du tube 30 traversée par la fibre optique 10 pour éviter la pénétration de polluants. L'autre extrémité du tube 30 peut comporter un fond 31.

L'interrogateur 80 peut comprendre un émetteur de lumière 801 d'un type usuel configuré pour illuminer la fibre optique 10. Par exemple l'émetteur de lumière 801 comporte une diode laser. L'interrogateur 80 peut comprendre un récepteur 802 d'un type usuel pour recevoir une lumière réfléchie par un ou des réseaux de Bragg et émettre un signal variant en fonction de la longueur d'onde de cette lumière réfléchie. Un tel récepteur peut comprendre une photodiode.

Cet interrogateur 80 peut comprendre un contrôleur 803 communiquant avec le récepteur 802. Le contrôleur 803 peut comprendre, par exemple, au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner par exemple aussi bien une unité centrale de traitement connue sous l'acronyme CPU, une unité graphique de traitement GPU, une unité digitale connue sous l'acronyme DSP, un microcontrôleur, etc.

Le contrôleur 81 peut être configuré de manière usuelle pour évaluer une déformation de l'objet 96 à l'aide du signal transmis par le récepteur, une variation subite de la déformation résultant d'une déformation dynamique comme expliqué par la suite. Par exemple, le contrôleur 81 mémorise une loi de mesure fournissant ladite déformation en fonction du signal reçu.

Les modules de l'interrogateur, à savoir, l'émetteur 801 ainsi que le récepteur 802 et le contrôleur 803, peuvent être agencés au sein d'un même boitier ou peuvent être localisés dans des endroits distincts. Au moins un des modules peut être situé sur l'objet 96 ou déporté.

A titre d'exemple, dans le cadre d'un objet 96 situé dans un repère tournant, l'émetteur 801 et le récepteur 802 peuvent être situés dans le repère tournant. Le contrôleur 803 peut alors être agencé dans le repère tournant, ou dans un repère fixe en étant relié au récepteur 802 par un dispositif de transmission usuel tel que par exemple un système à balais ou sans fil.

L'interrogateur 80, et par exemple son contrôleur 803, peuvent être reliés à un afficheur 82 configuré pour afficher une information porteuse de la déformation dynamique déterminée par ce contrôleur 803, et/ou à une mémoire 83 apte à mémoriser cette déformation dynamique.

Selon un autre aspect, le système de mesure 1 comprend un fluide non Newtonien 40 remplissant au moins une chambre 50 du tube 30. Par exemple, le fluide non Newtonien 40 est choisi parmi un fluide rhéoépaississant et un fluide viscoélastique, comme par exemple parmi un polymère fondu et un mélange de fécule de maïs et d'eau qui est un fluide rhéoépaississant. Les figures 1 et 2 illustrent un tube 30 ayant une unique chambre 51, 54 alors que la figure 3 illustre deux chambres 52, 53 à titre d'exemples. La référence 50 désigne n'importe quelle chambre, les références 51 à 54 étant utilisées pour des chambres particulières si besoin.

En présence d'une unique chambre 50, le ou les réseaux de Bragg 15 peuvent se situer entre la chambre 50 et un point d'ancrage 75, ce point d'ancrage 75 pouvant être le point de connexion de la fibre optique 10 à l'interrogateur 80 ou être constitué par un autre connecteur 750 immobilisant la fibre optique 10 par rapport au tube 30 par exemple. Alternativement, au moins un réseau de Bragg 15 peut se situer dans la chambre 50. En présence de plusieurs chambres 50, au moins un réseau de Bragg 15 peut se situer entre deux chambres 50.

Quelle que soit la réalisation et en référence à nouveau à la figure 1, le secteur de mesure 14 s'étend dans chaque chambre 50. Au sein d'une chambre 50, le fluide non Newtonien 40 est en contact du tube 30 et du secteur de mesure 14.

Par ailleurs, au moins une chambre 50 peut être fermée par au moins un bouchon 60 qui est disposé dans le tube 30 et qui est étanche au fluide non Newtonien 40, voire par un fond 31 ou une cloison 32 du tube 30. La référence 60 désigne n'importe quel bouchon, les références 61 à 66 étant utilisées pour désigner des bouchons particuliers si besoin.

Par ailleurs, le système de mesure 1 comporte au moins une bague 70 solidaire du secteur de mesure 14 et agencée dans ledit fluide non Newtonien 40. Par exemple, une telle bague 70 est collée au secteur de mesure 14. Par exemple, le secteur de mesure 14 comporte une bague 70 dans chaque chambre 50. La référence 70 désigne n'importe quelle bague, les références 71 à 74 étant utilisées pour désigner des bouchons particuliers si besoin.

Dans ces conditions, les figures 1 à 3 illustrent des réalisations diverses.

Selon la figure 1, le tube 30 peut être collé à un objet 96. Ce tube 30 loge une unique chambre 51 remplie de fluide non Newtonien 40, cette unique chambre 51 étant obturée longitudinalement par un unique bouchon 61 et un fond 31 du tube 30. Le secteur de mesure 14 s'étend totalement dans le tube 30, en allant de l'interrogateur 80 à la chambre 51 en traversant le bouchon 61. Le secteur de mesure 14 comporte en outre un réseau de Bragg 16 entre la chambre 51 et l'interrogateur 80, et une bague 71.

Selon la figure 2 le tube 30 peut être noyé dans l'objet 96. Ce tube 30 loge une unique chambre 54 remplie de fluide non Newtonien 40, cette unique chambre 54 étant obturée longitudinalement par deux bouchons 62, 63. Le secteur de mesure 14 s'étend partiellement dans le tube 30 et pénètre dans ce tube 30 en traversant une cloison 32. Le secteur de mesure 14 comporte en outre un réseau de Bragg 19 agencé dans la chambre 54, et une bague 74.

Selon la figure 3, le tube 30 peut être collé à un objet 96. Ce tube 30 loge deux chambres 52, 53 remplies de fluide non Newtonien 40. Une première chambre 52 est obturée longitudinalement par deux bouchons 64, 65 et une deuxième chambre 53 est obturée longitudinalement par un bouchon 66 et un fond 31 du tube 30. Le secteur de mesure 14 s'étend totalement dans le tube 30 et s'étend dans les deux chambres 52, 53. Le secteur de mesure 14 comporte deux réseaux de Bragg 17,18, à savoir un premier réseau de Bragg 17 entre l'interrogateur 80 et la première chambre 52, et un deuxième réseau de Bragg 18 entre la première chambre 52 et la deuxième chambre 53. De plus, le secteur de mesure comporte deux bagues 72, 73 respectivement dans la première chambre 52 et la deuxième chambre 53.

Ces trois réalisations sont données à titre d'exemples pour illustrer diverses configurations.

Quelle que soit la manière de réaliser un système de mesure 1 selon l'invention, la figure 4 illustre le fonctionnement du procédé mis en œuvre.

Cette figure 4 présente un diagramme illustrant en abscisse le temps, et en ordonnée la longueur d'onde de la lumière réfléchie par un réseau de Bragg 15 vers l'interrogateur 80. La courbe C1 illustre une variation de cette longueur d'onde.

Pour surveiller l'objet 96, l'interrogateur 80 émet une lumière dans la fibre optique 10. Cette lumière est réfléchie à une certaine longueur d'onde par un réseau de Bragg 15. Le récepteur 802 de l'interrogateur capte cette lumière réfléchie et transmet un signal usuel au contrôleur 803 de l'interrogateur 80. Ce contrôleur 803 en déduit une déformation subie.

En présence d'une déformation statique de l'objet 96, le tube 30 tend à se déformer. Dans ce cas, le fluide non Newtonien 40 déforme peu, ou pas, la fibre optique 10. Le secteur de mesure 14 est rendu automatiquement mobile par rapport au tube 30 en raison de la viscosité du fluide non Newtonien 40. La valeur de la longueur d'onde de la lumière réfléchie varie peu durant cette période P1. La déformation déterminée par le contrôleur varie peu voire ne varie pas. Le contrôleur 803 peut en déduire que l'objet 96 ne subit pas une déformation dynamique, par exemple tant que la variation de la déformation déterminée est inférieure à un seuil de déformation, et peut transmettre à une mémoire 83 ou à l'afficheur 82 cette information.

Durant un autre période P2, l'objet 96 subit une déformation dynamique. Dans ce cas, le procédé comporte une solidarisation du secteur de mesure 14 au tube 30 en raison de la viscosité du fluide non Newtonien 40 qui augmente. La fibre optique 10 se déforme au niveau d'au moins un réseau de Bragg 15. La longueur d'onde de la lumière réfléchie augmente brutalement. La déformation déterminée par le contrôleur varie fortement d'une valeur moyenne Vm à un pic Vp. Le contrôleur 803 peut être configuré pour déterminer la déformation dynamique subie. Par exemple, si variation de la déformation déterminée est supérieure ou égale au seuil de déformation, la déformation dynamique est égale à la variation de la déformation calculée par rapport à une valeur moyenne depuis un temps prédéterminé.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système de mesure (1) pour mesurer une déformation dynamique d'un objet (96), le système de mesure (1) comprenant une fibre optique (10), la fibre optique (10) s'étendant au moins partiellement dans un tube (30) qui est configuré pour être solidaire dudit objet (96), la fibre optique (10) ayant un secteur de mesure (14) mobile à l'intérieur du tube (30), le secteur de mesure (14) comprenant au moins un réseau de Bragg (15), le système de mesure (1) comprenant un fluide non Newtonien (40) remplissant au moins une chambre (50) délimitée par le tube (30), le secteur de mesure (14) s'étendant dans ladite au moins une chambre (50), le fluide non Newtonien (40) étant en contact du tube (30) et du secteur de mesure (14), **caractérisé en ce que** le système de mesure (1) comporte au moins une bague (70) solidaire du secteur de mesure (14) et agencée dans ledit fluide non Newtonien (40).

2. Système de mesure selon la revendication 1,
**caractérisé en ce que** ladite au moins une chambre (50) est fermée par au moins un bouchon (60) disposé dans le tube (30) et étanche au fluide non Newtonien (40).

3. Système de mesure selon l'une quelconque des revendications 1 à 2,
**caractérisé en ce que** la au moins une bague (70) est agencée dans ladite chambre.

4. Système de mesure selon l'une quelconque des revendications 1 à 3,
**caractérisé en ce que** ladite au moins une chambre (50) comporte deux chambres (50, 52, 53) remplies du fluide non Newtonien (40) et disposées de part et d'autre d'un dit réseau de Bragg (15), le secteur de mesure (14) s'étendant dans ces deux chambres (50, 52, 53).

5. Système de mesure selon l'une quelconque des revendications 1 à 3,
**caractérisé en ce que** le système de mesure (1) comporte une unique chambre (50), ledit réseau de Bragg (15) étant localisé entre un point d'ancrage (75) de la fibre optique (10) et ladite unique chambre (50).

6. Système de mesure selon l'une quelconque des revendications 1 à 3,
**caractérisé en ce que** ledit réseau de Bragg (15) est disposé dans ladite au moins une chambre (50).

7. Système de mesure selon l'une quelconque des revendications 1 à 6,
**caractérisé en ce que** le système de mesure (1) comporte un interrogateur (80) optiquement couplé à la fibre optique (10), l'interrogateur (80) étant configuré pour illuminer la fibre optique (10) ainsi que pour capter une lumière réfléchie par ledit réseau de Bragg (15) et en déduire une déformation dynamique de l'objet.

8. Système de mesure selon l'une quelconque des revendications 1 à 7,
**caractérisé en ce que** le secteur de mesure (14) comporte plusieurs réseaux de Bragg (15) ayant des pas différents.

9. Système de mesure selon l'une quelconque des revendications 1 à 8,
**caractérisé en ce que** ladite fibre optique (10) comporte un noyau (11) muni dudit au moins un réseau de Bragg (15), la fibre optique (10) comportant une gaine (12) entourant le noyau (11), la fibre optique (10) comprenant un revêtement (13) entourant la gaine (12), le revêtement ayant un alliage à base de fer et de Nickel.

10. Système de mesure selon l'une quelconque des revendications 1 à 9,
**caractérisé en ce que** ledit fluide non Newtonien (40) est un fluide rhéoépaississant ou un fluide viscoélastique.

11. Aéronef (95) muni d'un objet (96),
**caractérisé en ce que** ledit aéronef (95) comporte un système de mesure (1) selon l'une quelconque des revendications 1 à 10, ledit tube (30) étant accolé contre l'objet (96) ou noyé dans l'objet (96).

12. Procédé de mesure d'une déformation dynamique d'un objet (96) avec un système de mesure (1) selon l'une quelconque des revendications 1 à 10 comprenant une fibre optique (10) s'étendant dans un tube (30) qui est configuré pour être solidaire dudit objet (96), la fibre optique (10) ayant un secteur de mesure (14) mobile à l'intérieur du tube (30), le secteur de mesure (14) comprenant au moins un réseau de Bragg (15), le fluide non Newtonien (40) rendant en présence d'une déformation statique automatiquement mobile le secteur de mesure (14) par rapport au tube (30), le fluide non Newtonien (40) solidarisant en présence d'une déformation dynamique le secteur de mesure (14) au tube (30),
le procédé de mesure comportant, en présence d'une déformation dynamique, une émission d'une lumière dans la fibre optique (10), et une réception d'une lumière réfléchie par le réseau de Bragg (15), ainsi qu'une détermination de la déformation dynamique en fonction d'une loi de mesure et de ladite lumière réfléchie.

## Patentansprüche

1. Messsystem (1) zum Messen einer dynamischen Verformung eines Objekts (96), wobei das Messsystem (1) eine optische Faser (10) umfasst, wobei die optische Faser (10) sich zumindest teilweise in einem Rohr (30) erstreckt, das konfiguriert ist, um fest mit dem Objekt (96) verbunden zu sein, wobei die optische Faser (10) einen Messabschnitt (14) aufweist, der innerhalb des Rohrs (30) beweglich ist, wobei der Messabschnitt (14) mindestens ein Bragg-Gitter (15) umfasst,
wobei das Messsystem (1) ein nicht-newtonsches Fluid (40) umfasst, das mindestens eine durch das Rohr (30) begrenzte Kammer (50) füllt, wobei sich der Messabschnitt (14) in der mindestens einen Kammer (50) erstreckt, wobei das nicht-newtonsche Fluid (40) mit dem Rohr (30) und dem Messabschnitt (14) in Kontakt steht,
**dadurch gekennzeichnet, dass** das Messsystem (1) mindestens einen Ring (70) umfasst, der fest mit dem Messabschnitt (14) verbunden und in dem nicht-newtonschen Fluid (40) angeordnet ist.

2. Messsystem nach Anspruch 1,
**dadurch gekennzeichnet, dass** die mindestens eine Kammer (50) durch mindestens einen in dem Rohr (30) angeordneten und gegenüber dem nicht-newtonschen Fluid (40) dichten Stopfen (60) verschlossen ist.

3. Messsystem nach einem der Ansprüche 1 bis 2,
**dadurch gekennzeichnet, dass** der mindestens eine Ring (70) in der Kammer angeordnet ist.

4. Messsystem nach einem der Ansprüche 1 bis 3,
**dadurch gekennzeichnet, dass** die mindestens eine Kammer (50) zwei mit dem nicht-newtonschen Fluid (40) gefüllte Kammern (50, 52, 53) umfasst, die beiderseits eines Bragg-Gitters (15) angeordnet sind, und dass der Messabschnitt (14) sich in diesen beiden Kammern (50, 52, 53) erstreckt.

5. Messsystem nach einem der Ansprüche 1 bis 3,
**dadurch gekennzeichnet, dass** das Messsystem (1) eine einzige Kammer (50) umfasst, und dass das Bragg-Gitter (15) zwischen einem Verankerungspunkt (75) der optischen Faser (10) und der einzigen Kammer (50) angeordnet ist.

6. Messsystem nach einem der Ansprüche 1 bis 3,
**dadurch gekennzeichnet, dass** das Bragg-Gitter (15) in der mindestens einen Kammer (50) angeordnet ist.

7. Messsystem nach einem der Ansprüche 1 bis 6,
**dadurch gekennzeichnet, dass** das Messsystem (1) einen optisch mit der optischen Faser (10) gekoppelten Abtaster (80) umfasst, wobei der Abtaster (80) konfiguriert ist, um die optische Faser (10) zu beleuchten sowie von dem Bragg-Gitter (15) reflektiertes Licht zu erfassen und daraus eine dynamische Verformung des Objekts abzuleiten.

8. Messsystem nach einem der Ansprüche 1 bis 7,
**dadurch gekennzeichnet, dass** der Messabschnitt (14) mehrere Bragg-Gitter (15) mit unterschiedlichen Gitterkonstanten aufweist.

9. Messsystem nach einem der Ansprüche 1 bis 8,
**dadurch gekennzeichnet, dass** die optische Faser (10) einen Kern (11) mit dem mindestens einen Bragg-Gitter (15) aufweist, dass die optische Faser (10) eine den Kern (11) umgebende Hülle (12) aufweist, dass die optische Faser (10) eine die Hülle (12) umgebende Beschichtung (13) aufweist, und dass die Beschichtung eine Legierung auf Eisen- und Nickelbasis aufweist.

10. Messsystem nach einem der Ansprüche 1 bis 9,
**dadurch gekennzeichnet, dass** das nicht-newtonsche Fluid (40) ein rheo-verdickendes Fluid oder ein viskoelastisches Fluid ist.

11. Luftfahrzeug (95) mit einem Objekt (96),
**dadurch gekennzeichnet, dass** das Luftfahrzeug (95) ein Messsystem (1) gemäß einem der Ansprüche 1 bis 10 umfasst, wobei das Rohr (30) an das Objekt (96) angefügt oder in das Objekt (96) eingebettet ist.

12. Verfahren zum Messen einer dynamischen Verformung eines Objekts (96) mit einem Messsystem (1) nach einem der Ansprüche 1 bis 10, das eine optische Faser (10) umfasst, die sich in einem Rohr (30) erstreckt, das konfiguriert ist, um fest mit dem Objekt (96) verbunden zu sein, wobei die optische Faser (10) einen innerhalb des Rohrs (30) beweglichen Messabschnitt (14) aufweist, wobei der Messabschnitt (14) mindestens ein Bragg-Gitter (15) umfasst, wobei das nicht-newtonsche Fluid (40) bei Vorliegen einer statischen Verformung den Messabschnitt (14) gegenüber dem Rohr (30) automatisch beweglich macht, und das nicht-newtonsche Fluid (40) bei einer dynamischen Verformung den Messabschnitt (14) mit dem Rohr (30) fest verbindet,
wobei das Messverfahren bei Vorliegen einer dynamischen Verformung das Aussenden von Licht in die optische Faser (10) und das Empfangen von durch das Bragg-Gitter (15) reflektiertem Licht sowie das Bestimmen der dynamischen Verformung in Abhängigkeit von einer Messgesetzmäßigkeit und dem reflektierten Licht umfasst.

## Claims

1. Measuring system (1) for measuring a dynamic deformation of an object (96), the measuring system (1) comprising an optical fibre (10), the optical fibre (10) extending at least partially into a tube (30), which is configured to be integral with said object (96), the optical fibre (10) having a measuring section (14) movable inside the tube (30), the measuring section (14) comprising at least one Bragg grating (15),
measuring system (1) comprising a non-Newtonian fluid (40) filling at least one chamber (50) delimited by the tube (30), the measuring section (14) extending into said at least one chamber (50), the non-Newtonian fluid (40) being in contact with the tube (30) and with the measuring section (14), **characterised in that** the measuring system (1) has at least one ring (70) integral with the measuring section
(14) and arranged in said non-Newtonian fluid (40).

2. Measuring system according to claim 1, **characterised in that** said at least one chamber (50) is closed by at least one stopper (60) disposed in the tube (30) and leaktight to the non-Newtonian fluid (40).

3. Measuring system according to any one of claims 1 to 2,
**characterised in that** the at least one ring (70) is arranged in said chamber.

4. Measuring system according to any one of claims 1 to 3,
**characterised in that** said at least one chamber (50) has two chambers (50, 52, 53) filled with non-Newtonian fluid (40) and disposed on either side of a so-called Bragg grating (15), the measuring section (14) extending into these two chambers (50, 52, 53).

5. Measuring system according to any one of claims 1 to 3,
**characterised in that** the measuring system (1) has one single chamber (50), said Bragg grating (15) being located between an anchoring point (75) of the optical fibre (10) and said single chamber (50).

6. Measuring system according to any one of claims 1 to 3,
**characterised in that** said Bragg grating (15) is disposed in said at least one chamber (50).

7. Measuring system according to any one of claims 1 to 6,
**characterised in that** the measuring system (1) has a requester (80) optically coupled to the optical fibre (10), the requester (80) being configured to illuminate the optical fibre (10), as well as to capture a light reflected by said Bragg grating (15) and deduce from this, a dynamic deformation of the object.

8. Measuring system according to any one of claims 1 to 7,
**characterised in that** the measuring section (14) has several Bragg gratings (15) having different pitches.

9. Measuring system according to any one of claims 1 to 8,
**characterised in that** said optical fibre (10) has a core (11) provided with said at least one Bragg grating (15), the optical fibre (10) having a sheath (12) surrounding the core (11), the optical fibre (10) comprising a coating (13) surrounding the sheath (12), the coating having an iron- and nickel-based alloy.

10. Measuring system according to any one of claims 1 to 9,
**characterised in that** said non-Newtonian fluid (40) is a shear thickening fluid or a viscoelastic fluid.

11. Aircraft (95) provided with an object (96),
**characterised in that** said aircraft (95) has a measuring system (1) according to any one of claims 1 to 10, said tube (30) being attached against the object (96) or embedded in the object (96).

12. Method for measuring a dynamic deformation of an object (96) with a measuring system (1) according to any one of claims 1 to 10, comprising an optical fibre (10) extending into a tube (30), which is configured to be integral with said object (96), the optical fibre (10) having a measuring section (14) movable inside the tube (30), the measuring section (14) comprising at least one Bragg grating (15), the non-Newtonian fluid (40), making the measuring section (14) automatically movable with respect to the tube (30) in the presence of a static deformation, the non-Newtonian fluid (40) securing the measuring section (14) to the tube (30), in the presence of a dynamic deformation,
the measuring method having, in the presence of a dynamic deformation, an emission of a light in the optical fibre (10), and a reception of a light reflected by the Bragg grating (15), as well as a determination of the dynamic deformation, according to a measuring law and to said reflected light.
